# EUROPEAN PATENT APPLICATION

(11) **EP 4 342 557 A1**
(43) Date of publication of application: **27.03.2024**
(21) Application number: 22214192.1
(22) Date of filing: 23.08.2023
(51) Int. Cl.: A63F 13/424, A63F 13/215, A63F 13/22, A63F 13/24, A63F 13/26, A63F 13/54

(54) **ARTIFICIAL INTELLIGENT VOICE INTERACTIVE HANDLE AND VOICE RECOGNITION METHOD THEREOF**

(30) Priority: 23.09.2022 CN 202211164427
(71) Applicant: Shenzhen Dingchenglitian Technology Co., Ltd., Shenzhen 518000 (CN)
(72) Inventor: Jin, Huimin, Xiangfan, 441000 (CN)
(74) Representative: Zaboliene, Reda

(57) **Abstract**

The present disclosure provides an AI voice interactive handle and a voice recognition method of the AI voice interactive handle, the AI voice interactive handle includes: The present disclosure provides an artificial intelligent (AI) voice interactive handle comprising: a handle body; at least one processor; and a storage device coupled to the at least one processor, and storing instructions for execution by the at least one processor to cause the at least one processor to: input voice command information comprising voice commands; analyze and process the inputted voice command information, recognize words of the voice command information and extract feature information of the voice command information; convert the extracted feature information into a data command; store a voice command library, wherein the voice command library comprises pre-stored voice commands corresponding to each of the voice commands; compare the pre-stored voice commands with the data commend, when at least one of the pre-stored voice commands matches the data command, issue a corresponding operation command; and based on the operation command, control the handle body to execute operation corresponding to the matched pre-stored voice commands.

## Description

### RELATED APPLICATIONS

This application claims the benefit of priority to Chinese Patent Application Number 202211164427.6 filed on September 23, 2022, in the China National Intellectual Property Administration. The entire contents of the above-identified application are hereby incorporated by reference.

### TECHNICAL FIELD

The disclosure relates to the technical field of game controllers, and in particular to an AI (artificial intelligence) voice interactive handle and a voice recognition method thereof.

### BACKGROUND

Game controller is a component of a common electronic game machine, and controls a game virtual role by operating buttons thereof.

Most existing game controller can be manually operated but cannot be controlled by voice. During the game, players need to keep pressing the buttons, and the user experience may be improved.

### SUMMARY

The present disclosure has been made in view of the above shortcomings, which provides an AI voice interactive handle and a voice recognition method thereof.

The present disclosure provides an artificial intelligent (AI) voice interactive handle comprising: a handle body; at least one processor; and a storage device coupled to the at least one processor, and storing instructions for execution by the at least one processor to cause the at least one processor to: input a piece of voice command information comprising voice commands; analyze and process the inputted voice command information, recognize words of the voice command information and extract feature information of the voice command information; convert the extracted feature information into a data command; store a voice command library, wherein the voice command library comprises pre-stored voice commands corresponding to each of the voice commands; compare the pre-stored voice commands with the data commend, when at least one of the pre-stored voice commands matches the data command, issue a corresponding operation command; and based on the operation command, control the handle body to execute operation corresponding to the matched pre-stored voice commands.

Preferably, the handle body comprises a feedback lamp and a speaker configured for transmitting light and sound respectively, when at least one of the pre-stored voice commands matches the data command.

Preferably, the voice command library further comprises voice feedback information, the at least one processor is further caused to: when at least one of the pre-stored voice commands matches the data command, select the voice feedback information corresponding to the pre-stored voice commands by reading the voice command library; and feedback the voice feedback information by sound and transmitting light.

Preferably, the voice command information further comprises customized voice commands, the at least one processor is further caused to: based on the customized voice commands, customize the pre-stored voice command in the voice command library.

Preferably, based on the customized voice commands, customize the pre-stored voice command in the voice command library, the at least one processor is further caused to: input the voice command information comprising customized voice commands and transmit the voice command information; analyze and process the inputted voice command information, and extract customized feature information of the voice command information; convert the extracted customized feature information into a customized data command; receive the customized data command; and modify or re-write command information corresponding to the customized voice command.

Preferably, the command information is modifiable and re-writable in the voice command library, the command information comprises at least one of a handle voice name, a game terminal voice name, a voice command, and a piece of voice feedback information.

The present disclosure provides a voice recognition method of an artificial intelligent (AI) voice interactive handle, comprising: step 100, inputting voice command information comprising voice commands; step 200, analyzing and processing the inputted voice command information, and recognizing words of the voice command information and extracting first feature information of the voice command information; step 300, converting the extracted feature information into a data command; step 400, storing a voice command library, wherein the voice command library comprises pre-stored voice commands corresponding to each of the voice commands; step 500, comparing the pre-stored voice commands with the data commend; step 600, when at least one of the pre-stored voice commands matches the data command, issuing a corresponding operation command; and step 700, based on the operation command, controlling a handle body of the AI voice interactive handle to execute the operations corresponding to the matched pre-stored voice commands.

Preferably, when at least one of the pre-stored voice commands matches the data command, further comprises: step 800, transmitting light and/or sound.

Preferably, the voice command library further comprises voice feedback information, the step of transmitting light and sound comprises: step 810, selecting the voice feedback information corresponding to the pre-stored voice commands by reading the voice command library, step 820, feedbacking the voice feedback information by sound and transmitting light.

Preferably, the voice command information further comprises customized voice commands, the voice recognition method further comprises: step 900, based on the customized voice commands, customizing the pre-stored voice command in the voice command library.

Preferably, the step of customizing the pre-stored voice command in the voice command library comprises: step 910, inputting the voice command information comprising customized voice commands and transmitting the voice command information; step 920, analyzing and processing the inputted voice command information, and extracting customized feature information of the voice command information; step 930, converting the extracted customized feature information into a customized data command; step 940, receiving the customized data command; and step 950, modifying or re-writing command information corresponding to the customized voice command.

Preferably, the command information is modifiable and re-writable in the voice command library, the command information comprises at least one of a handle voice name, a game terminal voice name, a voice command, and a piece of voice feedback information.

The above technical solutions have the following advantages or beneficial effects.

Through multi-module cooperation, the controller can receive and execute voice command, and start the controller or game remotely to reduce the manual operation of the players. Moreover, the controller will send specific voice feedback after executing the command, interacting with the player and improving the player's playing experience.

### BRIEF DESCRIPTION OF DRAWINGS

The present disclosure, and its features, shapes, and advantages, will become more apparent by reading the detailed description of the non-restrictive embodiments with reference to the following drawings below. The same marks in all of the attached drawings indicate the same sections. The following drawings are not deliberately drawn in proportion, and the emphasis is to show the main idea of the present disclosure.
FIG. 1 is a diagrammatic view of a handle according to an embodiment of the present disclosure.
FIG. 2 is a diagrammatic view of a back of the handle according to the embodiment of the present disclosure.
FIG. 3 is a block diagram of the handle according to the embodiment of the present disclosure.
FIG. 4 is a flowchart of a voice control process according to the embodiment of the present disclosure.
FIG. 5 is a flowchart of a customized voice setting process according to the embodiment of the present disclosure.
FIG. 6 is a sub-flowchart of a voice recognition method according to one embodiment of the present disclosure.
FIG. 7 is a sub-flowchart of a voice recognition method according to another embodiment of the present disclosure.
FIG. 8 is a sub-flowchart of a voice recognition method according to another embodiment of the present disclosure.
FIG.9 is another block diagram of a handle according to an embodiment of the present disclosure.

### DETAILED DESCRIPTION

It is important to note that the embodiments and the characteristics in the embodiments of the present disclosure can be combined without conflict. It should be noted that the terms used herein are only intended to describe the specific embodiments, rather than those that they are intended to limit the exemplary embodiments according to the present application.

It should be understood that, when used in this specification, such as the terms "comprises" and / or "comprising", it indicates that characteristics, steps, operations, devices, components, and / or combinations thereof exist.

If the terms "center", "upper", "lower", "left", "right", "vertical", "horizontal", "inner", "outer", etc. appear, the directional or positional relationship is based on the directional or positional relationship shown in the drawings, which is only to facilitate description and simplified description, rather than indicating or implying that the device or element must be specifically oriented, constructed and operated, and therefore cannot be understood as a limitation to the present disclosure.

For example, the terms "first", "second" and "third" are used for descriptive purposes only, and cannot be understood as indicating or implying relative importance.

Unless otherwise specified or limited, the terms "installation", "connected", and "coupled" are used broadly, and may be, for example, fixed connections, detachable connections, or integral connections; may also be mechanical or electrical connections; may also be direct connections or indirect connections via intervening structures; and may also be inner communications of two elements. The specific meanings of the above terms in the present disclosure can be understood by those skilled in the art according to specific situations.

The technical solutions in the embodiments of the present disclosure are described below with reference to the drawings in the embodiments of the present disclosure. Obviously, the described embodiments are only a part of, but not all of, the embodiments of the present disclosure. Therefore, the following detailed description of the embodiments of the present disclosure provided in the drawings is not intended to limit the scope of the invention as claimed, but is merely representative of selected embodiments of the invention. All other embodiments obtained by persons skilled in the art based on the embodiments of the present disclosure without creative efforts shall belong to the scope of protection of the present disclosure.

### First embodiment

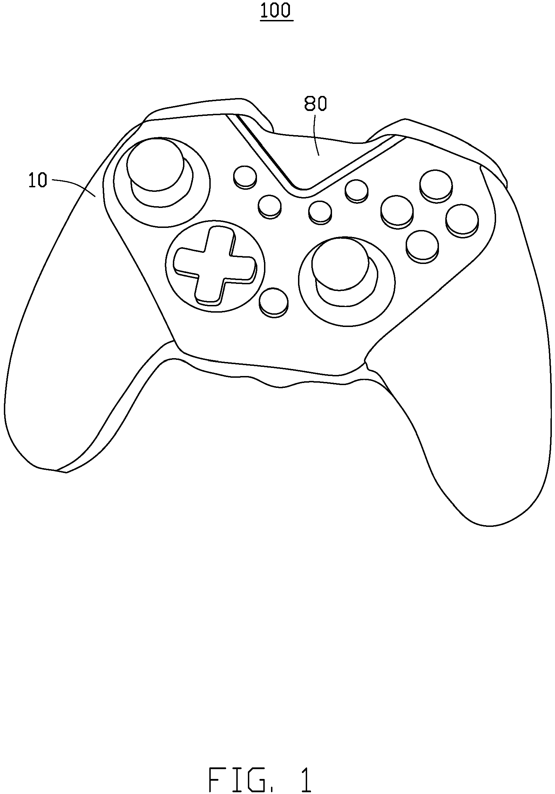

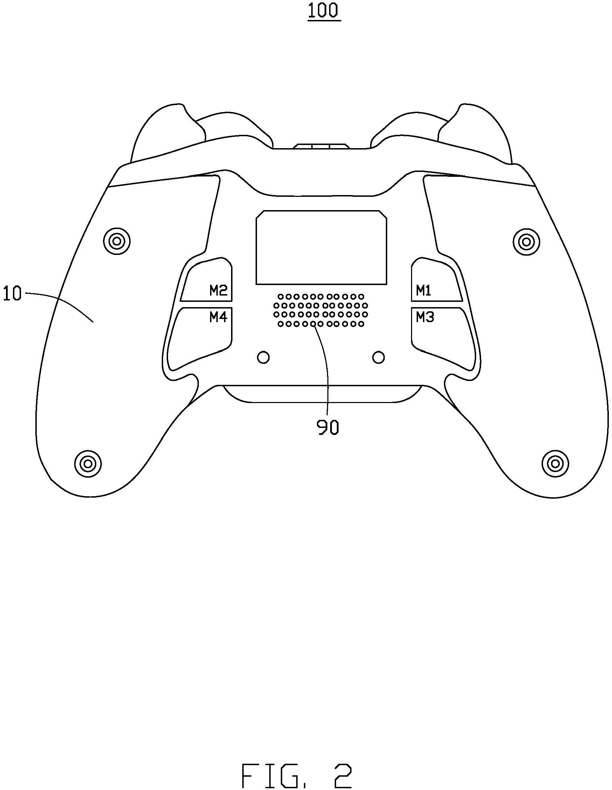

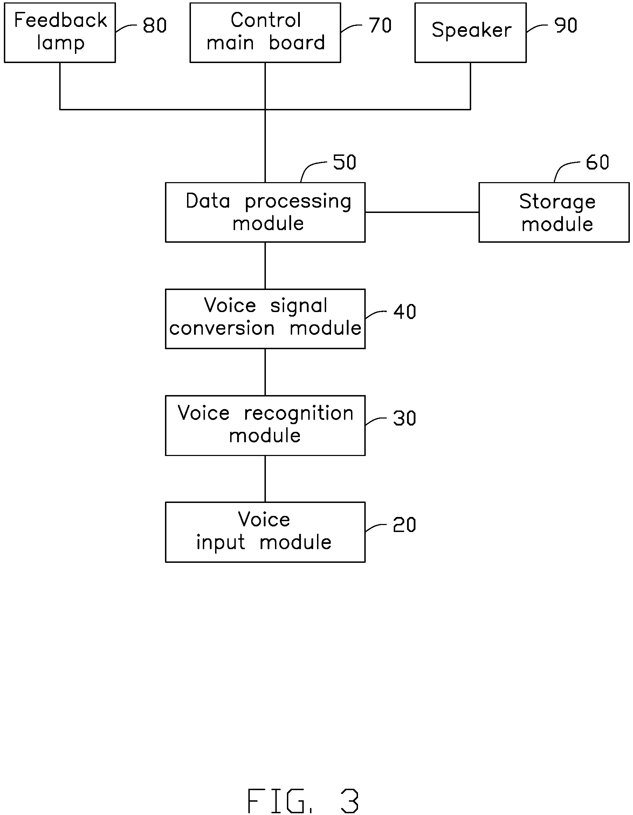

Referring to FIGs. 1-3, the present disclosure provides an artificial intelligent (AI) voice interactive handle 100. The AI voice interactive handle 100 comprises a handle body 10, and a voice input module 20, a voice recognition module 30, a voice signal conversion module 40, a data processing module 50, a storage module 60 and a control main board 70 which are arranged in the handle body.

The voice input module 20 is configured to input voice command information comprising voice commands in real time. The voice command information comprises at least one of starting the handle or the game, game setting and sound-light setting.

The voice recognition module 30 is coupled to the voice input module 20 and configured to analyze and process the inputted voice command information, recognize words of the voice command information and extract feature information of the voice command information.

The voice signal conversion module 40 is coupled to the voice recognition module 30 and configured to convert the extracted feature information into a data command.

The storage module 60 is configured to store a voice command library, the voice command library comprises pre-stored voice commands corresponding to each of the voice commands.

The data processing module 50 is coupled to the voice signal conversion module 40 and the storage module 60, and configured to read the command information corresponding to various voices store in the voice command library, and compare pre-stored voice commands with the data command, when at least one of the pre-stored voice commands matches the data command, the data processing module 50 issues a corresponding operation command.

The control main board 70 is coupled to the data processing module 50 and configured to control the handle to execute operation corresponding to the matched pre-stored voice commands based on the operation command .

the voice input module 20, the voice recognition module 30, the voice signal conversion module 40, the data processing module 50, the storage module 60 and the control main board 70 are arranged in the handle body 10.

In addition, the handle body 10 further comprises a feedback lamp 80 and a speaker 90 transmitting light and sound respectively, when at least one of the pre-stored voice commands matches the data command.

In addition, the voice command library further comprises voice feedback information, when at least one of the pre-stored voice commands matches the data command, the data processing module 50 selects the voice feedback information corresponding to the pre-stored voice commands by reading the voice command library, and feedbacks the voice feedback information by sound and/or light.

In one embodiment, the data processing module plays the voice feedback information through the loudspeaker for feedback, and starts the feedback lamp 80 at the same time.

In this embodiment, by means of the cooperation of a plurality of modules, the AI voice interactive handle 100 can receive and execute the voice command, start the handle or game remotely, reduce the player's manual operation, and send specific voice feedback after executing the command, interact with the player, thereby improving the play experience of the player.

In this embodiment, the voice command information further comprises customized voice commands, the data processing module 50 customizes the pre-stored voice command in the voice command library based on the customized voice commands.

In one embodiment, the voice input module 20 is also configured to input the voice command information comprising customized voice commands and transmit the voice command information. The voice recognition module 30 is also configured to analyze and process the inputted voice command information, and extract customized feature information of the voice command information. The voice signal conversion module 40 is also configured to convert the extracted customized feature information into a customized data command. The data processing module 50 is also configured to receive the customized data command, and modify or re-write command information corresponding to the customized voice command.

The command information is modifiable and re-writable in the voice command library, the command information comprises at least one of a handle voice name, a game terminal voice name, a voice command, and a piece of voice feedback information. In other embodiments, the user may customize according to the requirements, not limited to the above information

In this embodiment, the player can customize the voice command and feedback voice information, and the handle or game terminal with the corresponding name can be started by voice.

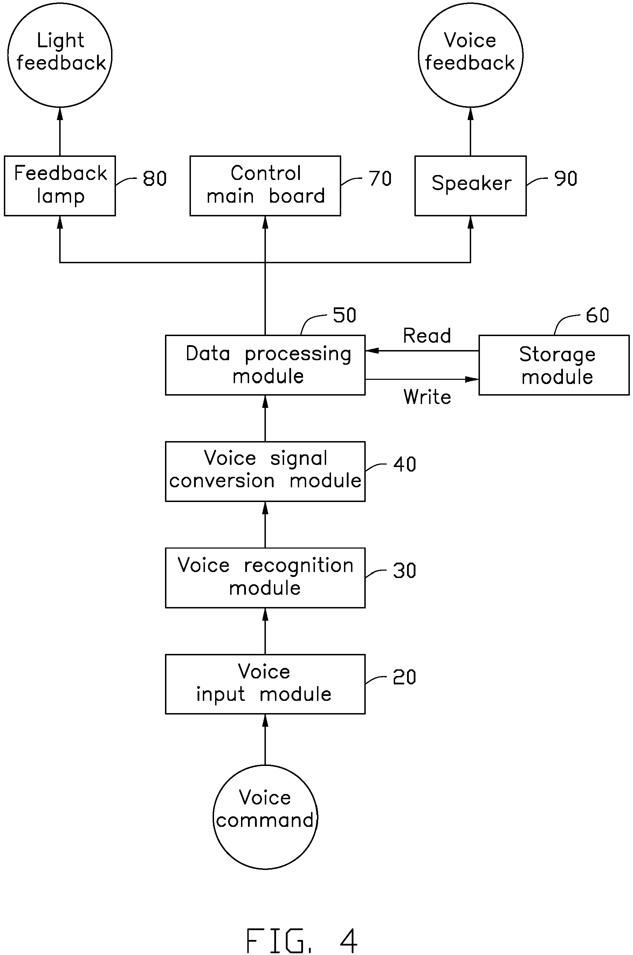

Referring to FIG.4, when the users want to control the AI voice interactive handle 100, the users send a control command by voice, that is send a voice command information, and the voice input module 20 inputs the control command and transmits them to the voice recognition module 30, the control command comprises starting the handle or the game, game setting and sound-light setting, the voice recognition module 30 analyzes and recognizes the inputted voice command information, removes redundant part, and extracts feature information of the voice command information, the voice information conversion module 40 converts the extracted feature information into the data information, after receiving the data information, the data processing module 50 selects the corresponding command by reading the voice command library in the storage module 60 and sends the command information corresponding to the voice command to the control main board 70, the control main board 70 executes the command.

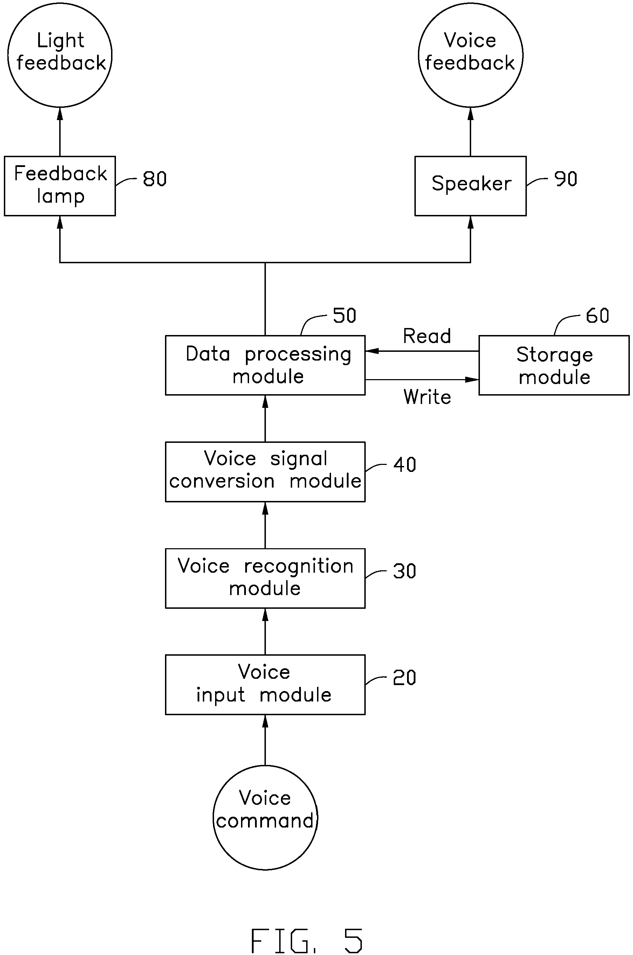

Referring to FIG.5, when the users want to customize the voice command, the users send a customized voice command by voice, that is a customized voice command and the voice input module 20 inputs the customized voice command and transmits them to the voice recognition module 30, the voice recognition module 30 analyzes and recognizes the inputted customized voice information, removes the redundant part, and extracts the feature information of the customized voice information, the voice information conversion module 40 converts the extracted feature information into the data information, and after receiving the modified data information, the data processing module 50 writes the handle voice name, the game terminal voice name, the voice command, and the voice feedback information into the storage module 60.

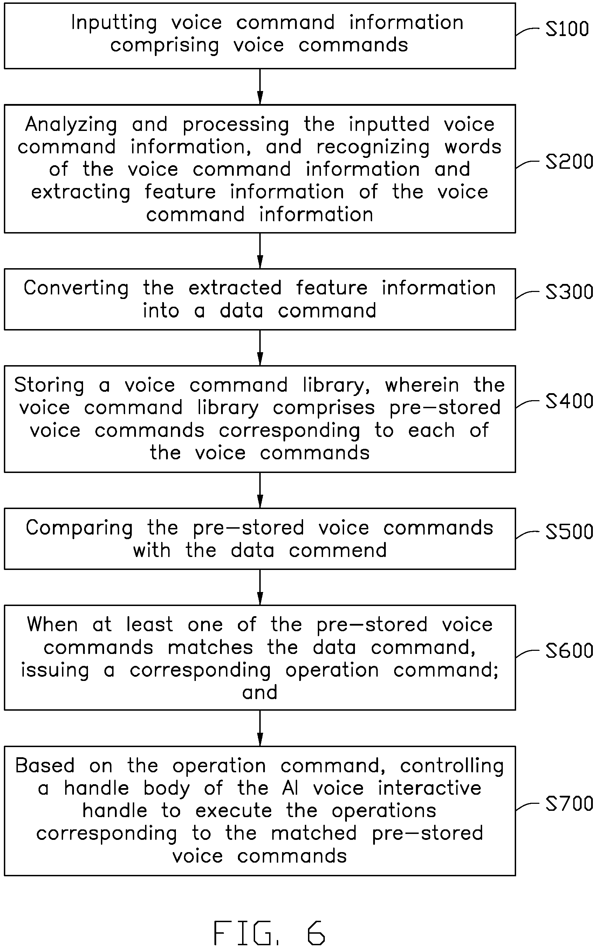

Referring to FIG.6, the present disclosure further provides a voice recognition method for the AI voice interactive handle 100 described as above. The voice recognition method comprises following steps.

Step 100, inputting voice command information comprising voice commands.

Step 200, analyzing and processing the inputted voice command information, and recognizing words of the voice command information and extracting feature information of the voice command information.

In this embodiment, the feature information could be keyword information.

The step of extracting feature information of the voice command can be achieved by removing redundant parts.

Step 300, converting the extracted feature information into a data command.

Step 400, storing a voice command library, wherein the voice command library comprises pre-stored voice commands corresponding to each of the voice commands.

Step 500, comparing the pre-stored voice commands with the data commend.

In this embodiment, command information in the voice command library can be compared with the data information one by one.

By comparing the command information with the data command, the corresponding instructions can be issued.

Step 600, when at least one of the pre-stored voice commands matches the data command, issuing a corresponding operation command.

Step 700, based on the operation command, controlling a handle body of the AI voice interactive handle to execute the operations corresponding to the matched pre-stored voice commands.

In one embodiment, when at least one of the pre-stored voice commands matches the data command, further comprises step of transmitting light and/or sound.

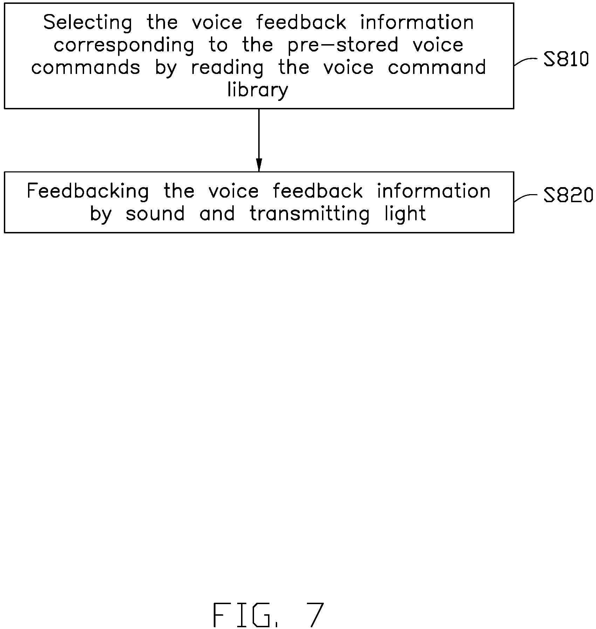

Referring to FIG.7, in one embodiment, the voice command library further comprises voice feedback information, the step of transmitting light and sound comprises following steps.

Step 810, selecting the voice feedback information corresponding to the pre-stored voice commands by reading the voice command library.

Step 820, feedbacking the voice feedback information by sound and transmitting light.

The voice command information further comprises customized voice commands, the voice recognition method further comprises step of based on the customized voice commands, customizing the pre-stored voice command in the voice command library.

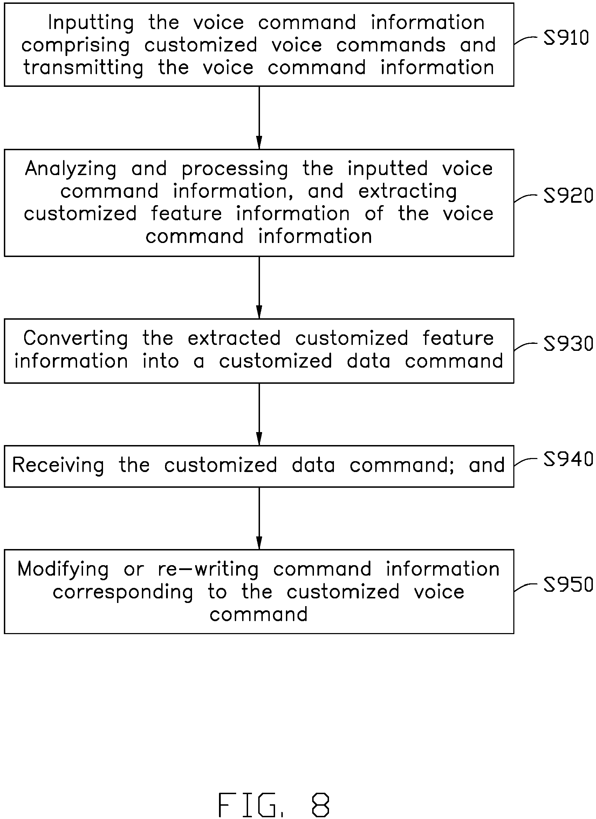

Referring to FIG. 8, in one embodiment, the step of customizing the pre-stored voice command in the voice command library comprises following steps.

Step 910, inputting the voice command information comprising customized voice commands and transmitting the voice command information.

Step 920, analyzing and processing the inputted voice command information, and extracting customized feature information of the voice command information.

Step 930, converting the extracted customized feature information into a customized data command.

Step 940, receiving the customized data command.

Step 950, modifying or re-writing command information corresponding to the customized voice command.

In one embodiment, the command information is modifiable and re-writable in the voice command library, the command information comprises at least one of a handle voice name, a game terminal voice name, a voice command, and a voice feedback information.

The command information comprises at least one of a handle voice name, a game terminal voice name, a voice command, and a voice feedback information.

The above mentioned are only preferred embodiments of the present disclosure, and do not limit the scope of the present disclosure. All the equivalent structural transformations made using the description of the invention and the attached drawings, or directly or indirectly applied in other related technical fields, are equally included in the scope of the present disclosure.

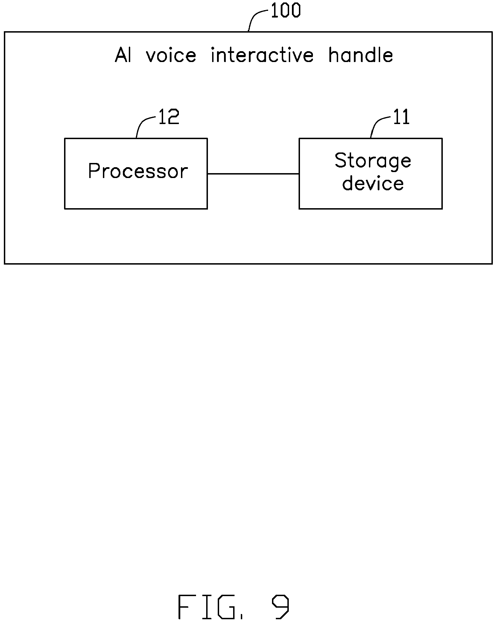

Referring to FIG. 9, the AI voice interactive handle 100 can further include a storage device 11 and at least one processor 12. The at least one processor 12 is used to execute a plurality of modules (e.g., the voice input module 20, the voice recognition module 30, the voice signal conversion module 40 and the data processing module 50) and other applications, such as an operating system, installed in the AI voice interactive handle 100. The storage device 11 stores the computerized instructions of the plurality of modules, and one or more programs, such as the operating system and applications of the AI voice interactive handle 100. The storage device 11 can be any type of non-transitory computer-readable storage medium or other computer storage device, such as a hard disk drive, a compact disc, a digital video disc, a tape drive, a storage card (e.g., a memory stick, a smart media card, a compact flash card), or other suitable storage medium, for example. The at least one processor 12 can be a central processing unit (CPU), a microprocessor, or other data processor chip that performs functions in the AI voice interactive handle 100.

The foregoing descriptions are merely exemplary embodiments of the present disclosure, and are not intended to limit the patent scope of the present disclosure. Any equivalent structural transformation made by using the description and the accompanying drawings of the present disclosure, or direct or indirect application in other related technical fields, shall belong to the patent scope of protection of the present disclosure.

## Claims

1. An artificial intelligent (AI) voice interactive handle comprising:
a handle body;
at least one processor; and
a storage device coupled to the at least one processor, and storing instructions for execution by the at least one processor to cause the at least one processor to:
input a piece of voice command information comprising voice commands;
analyze and process the inputted voice command information, recognize words of the voice command information and extract feature information of the voice command information;
convert the extracted feature information into a data command;
store a voice command library, wherein the voice command library comprises pre-stored voice commands corresponding to each of the voice commands;
compare the pre-stored voice commands with the data commend,
when at least one of the pre-stored voice commands matches the data command, issue a corresponding operation command; and
based on the operation command, control the handle body to execute operation corresponding to the matched pre-stored voice commands.

2. The AI voice interactive handle according to claim 1, wherein
the handle body comprises a feedback lamp and a speaker configured for transmitting light and sound respectively, when at least one of the pre-stored voice commands matches the data command.

3. The AI voice interactive handle according to claim 1, wherein the voice command library further comprises voice feedback information, the at least one processor is further caused to:
when at least one of the pre-stored voice commands matches the data command, select the voice feedback information corresponding to the pre-stored voice commands by reading the voice command library; and
feedback the voice feedback information by sound and transmitting light.

4. The AI voice interactive handle according to claim 1, wherein
the voice command information further comprises customized voice commands, the at least one processor is further caused to:
based on the customized voice commands, customize the pre-stored voice command in the voice command library.

5. The AI voice interactive handle according to claim 4, wherein based on the customized voice commands, customize the pre-stored voice command in the voice command library, the at least one processor is further caused to:
input the voice command information comprising customized voice commands and transmit the voice command information;
analyze and process the inputted voice command information, and extract customized feature information of the voice command information;
convert the extracted customized feature information into a customized data command;
receive the customized data command; and
modify or re-write command information corresponding to the customized voice command.

6. The AI voice interactive handle according to claim 3, wherein
the command information is modifiable and re-writable in the voice command library, the command information comprises at least one of a handle voice name, a game terminal voice name, a voice command, and a voice feedback information.

7. A voice recognition method of an artificial intelligent (AI) voice interactive handle, comprising:
step 100, inputting voice command information comprising voice commands;
step 200, analyzing and processing the inputted voice command information, and recognizing words of the voice command information and extracting feature information of the voice command information;
step 300, converting the extracted feature information into a data command;
step 400, storing a voice command library, wherein the voice command library comprises pre-stored voice commands corresponding to each of the voice commands;
step 500, comparing the pre-stored voice commands with the data commend;
step 600, when at least one of the pre-stored voice commands matches the data command, issuing a corresponding operation command; and
step 700, based on the operation command, controlling a handle body of the AI voice interactive handle to execute the operations corresponding to the matched pre-stored voice commands.

8. The voice recognition method according to claim 7, wherein when at least one of the pre-stored voice commands matches the data command, further comprises:
transmitting light and/or sound.

9. The voice recognition method according to claim 8, wherein the voice command library further comprises voice feedback information, the step of transmitting light and sound comprises:
step 810, selecting the voice feedback information corresponding to the pre-stored voice commands by reading the voice command library,
step 820, feedbacking the voice feedback information by sound and transmitting light.

10. The voice recognition method according to claim 7, wherein the voice command information further comprises customized voice commands, the voice recognition method further comprises:
based on the customized voice commands, customizing the pre-stored voice command in the voice command library.

11. The voice recognition method according to claim 10, wherein the step of customizing the pre-stored voice command in the voice command library comprises:
step 910, inputting the voice command information comprising customized voice commands and transmitting the voice command information;
step 920, analyzing and processing the inputted voice command information, and extracting customized feature information of the voice command information;
step 930, converting the extracted customized feature information into a customized data command;
step 940, receiving the customized data command; and
step 950, modifying or re-writing command information corresponding to the customized voice command.

12. The voice recognition method according to claim 10, wherein
the command information is modifiable and re-writable in the voice command library, the command information comprises at least one of a handle voice name, a game terminal voice name, a voice command, and a voice feedback information.
